Europäisches Patentamt

European Patent Office

Office européen des brevets

(19)

(11) Veröffentlichungsnummer: **0 393 686**
**A2**

(12) # EUROPÄISCHE PATENTANMELDUNG

(21) Anmeldenummer: 90107471.6

(22) Anmeldetag: **19.04.90**

(51) Int. Cl.5: **F16L 11/02, E21F 1/04, B29D 23/22, B29C 41/14**

(30) Priorität: **20.04.89 DE 3912957**

(43) Veröffentlichungstag der Anmeldung:
**24.10.90 Patentblatt 90/43**

(84) Benannte Vertragsstaaten:
**AT BE DE ES FR GB IT NL SE**

(71) Anmelder: **MEHLER VARIO SYSTEM GmbH**
**Edelzeller Strasse 53**
**D-6400 Fulda(DE)**

(72) Erfinder: **Schwan, Rüdiger, Dr.**
**Bronzeller Strasse 10**
**D-6400 Fulda(DE)**

(74) Vertreter: **Beyer, Rudi**
**Patentanwalt Dipl.-Ing. Rudi Beyer Am**
**Dickelsbach 8**
**D-4030 Ratingen 6 (Hösel)(DE)**

(54) **Faltbare wetterfeste Schlauchlutte aus Textilien mit luftdichter Beschichtung, insbesondere zur Verwendung im Untertagebergbau oder Tunnelbau, vornehmlich im Steinkohlebergbau und Verfahren und Einrichtung zum Herstellen einer solchen Lutte.**

(57) Die Erfindung betrifft eine faltbare, luftdichte, wetterfeste, aus nahtlos rundgewirkten, rundgewebten oder rundgestrickten Schläuchen bestehende Lutte, die innen und außen mit einer ununterbrochenen Kunststoffbeschichtung versehen ist. Des weiteren betrifft die Erfindung ein Verfahren zum Herstellen solcher Luttenschläuche und eine geeignete Einrichtung (Vorrichtung) zum Durchführen des Verfahrens. Erstmalig wird aufgezeigt, wie die Wirtschaftlichkeit und Weiterreißfestigkeit von faltbaren Luttenschläuchen erheblich verbessert werden kann.

EP 0 393 686 A2

## Faltbare wetterfeste Schlauchlutte aus Textilien mit luftdichter Beschichtung, insbesondere zur Verwendung im Untertagebergbau oder Tunnelbau, vornehmlich im Steinkohlebergbau, und Verfahren und Einrichtung zum Herstellen einer solchen Lutte

Die Erfindung betrifft eine faltbare wetterfeste Schlauchlutte aus Textilien mit luftdichter Beschichtung, insbesondere zur Verwendung im Untertagebergbau oder Tunnelbau, vornehmlich im Steinkohlebergbau.

Des weiteren betrifft die Erfindung ein Verfahren zum Herstellen einer wetterfesten Schlauchlutte aus Textilien, z. B. mit Kunststoffbeschichtung.

Schließlich betrifft die Erfindung eine Einrichtung zum Herstellen einer wetterfesten Schlauchlutte aus Textilien, z. B. mit Kunststoffbeschichtung.

Es sind sogenannte gewebelose Lutten, vornehmlich zur Verwendung im untertägigen Steinkohlebergbau, vorbekannt. Hierbei wird eine thermoplastische Folie überlappt zusammengeschweißt. Die Schweißnaht verläuft in axialer Richtung der Lutte. Nachteilig ist hierbei die geringe Temperatur- und Weiterreißfestigkeit, da schon geringfügige Einkerbungen genügen, um die Lutte zum Einreißen zu bringen.

Es ist weiterhin bekannt, Gewebe zwischen zwei Folien einzubetten. Hierbei handelt es sich um Bandmaterial, das durch eine Axialschweißnaht zu einem Schlauch verbunden wird. Das Gewebe kann engmaschiges Material sein, es kann aber auch eine gröbere Gitterstruktur aufweisen. Auch diese Lutten haben den Nachteil der Schweißnaht, weil die Schweißnaht nur die Beschichtung verbindet und infolge dessen die Schweißnaht nur so viel aufnehmen kann wie die Beschichtung an Haftfestigkeit zum Gewebe besitzt. Diese Haftfestigkeit ändert sich mit der Temperatur und kann bei hohen Temperaturen entsprechend gering sein.

Vorbekannt sind auch Lutten, bei denen das Bandmaterial spiralförmig aufgewickelt und an den spiralförmig (schraubenlinienförmig) verlaufenden Überlappungsstellen verschweißt wird. Dieses Verfahren wird sowohl bei Folien, als auch bei Lutten, die aus gewebebeschichtetem Material bestehen, angewendet.

Zum Stand der Technik gehören auch Lutten, die aus rundgewebtem Material bestehen. Es entstehen bei diesem Verfahren zwei diametral gegenüberliegende, in Längsrichtung der Lutte verlaufende Zwickel. Bei diesen Lutten ist es auch bekannt, das Gewebe außen mit PVC-Material zu beschichten. An den Zwickeln wird das Material verwebt. Nachteilig ist, daß das Gewebe dem staubhaltigen Luftstrom ungeschützt ausgesetzt ist.

Der Erfindung liegt die Aufgabe zugrunde, Weiterreiß- und Zugfestigkeit der gattungsmäßig vorausgesetzten Lutten möglichst anzunähern, um eine Überdimensionierung der Lutten zu verhindern und dadurch auch die Wirtschaftlichkeit zu steigern. Des weiteren sollen alle Schweißnähte vermieden und eine höhere Lebensdauer durch besseren Schutz der eingebetteten Fäden bei größerer Dichtigkeit des Wandungsmaterials erreicht werden.

Des weiteren liegt der Erfindung die Aufgabe zugrunde, ein vorteilhaftes Verfahren zum Herstellen solcher Lutten zur Anwendung zu bringen.

Schließlich liegt der Erfindung die Aufgabe zugrunde, eine vorteilhafte Einrichtung (Vorrichtung) zum Durchführen des erfindungsgemäßen Verfahrens anzubieten.

## Lösung der Aufgabe betreffend die Lutte

Diese Aufgabe wird durch die in **Patentanspruch 1** wiedergegebenen Merkmale gelöst.

Eine erfindungsgemäße Lutte besteht aus einem rundgestrickten, rundgewebten oder rundgewirkten Basisschlauch, der innen und außen mit einer lückenlosen Beschichtung, insbesondere auf Kunstoffbasis, versehen ist.

Rundstrickwaren und Rundwirkwaren sind textile Flächengebilde, die aus einem oder mehreren Fadensystemen durch Maschenbildung auf folgenden Maschinen hergestellt werden können:
Rundstricken mit:

1 a) Rundstrickmaschine Ausführungen:
L-L, R-R, L-R mit einem oder mehreren Fadensystemen
b) Kettenrundstrickmaschine Ausführungen:
L-L, R-R, L-R mit mehreren Fadensystemen
Rundwirken mit:

2 a) Rundwirkmaschine Ausführungen:
L-L, R-R, L-R mit einem oder mehreren Fadensystemen

b) Kettenrundwirkmaschine Ausführungen:

L-L, R-R, L-R mit mehreren Fadensystemen

Die Buchstaben R und L stehen für rechte und linke Maschen.

Bei allen unter Punkt 1 und 2 stehenden Maschinen sind die Nadeln kreisförmig angeordnet, so daß bei der Maschenwarenproduktion ein längsnahtloser Schlauch im Gegensatz zu allen möglichen Flachstrick- und Wirkmaschinen entsteht.

Je nach Ausführung sind zusätzliche Bindungselemente wie Henkel, Flottung, Schuß etc. möglich.

## Unterschied Stricken/Wirken

Beim Stricken wird eine Masche nach der anderen gebildet, beim Wirken eine Maschenreihe nach der anderen. Beim Stricken und Wirken verläuft der Faden in Querrichtung analog dem Schuß eines Gewebes.

Beim Kettenstricken und Kettenwirken - hier sind mehrere Fadensysteme erforderlich - verläuft der Faden in Längsrichtung analog der Kette eines Gewebes.

**Bild A**

**Bild B**

R-L Maschenware, Grundtyp, rechte Seite

R-L Kettenmaschenware, Grundtyp, linke Seite

## Einsatzfähige Maschenwaren

Möglichkeiten der Maschenwarenproduktion auf obengenannten Maschinen:

1 a) + 2 a) Rechts-Rechts Maschenware

Links-Links Maschenware

Rechts-Links Maschenware

1 b) + 2 b) Rechts-Rechts Kettenmaschenware

Links-Links Kettenmaschenware

Rechts-Links Kettenmaschenware

Die obengenannten Maschenwaren können mit den verschiedensten Bindungselementen kombiniert werden wie Henkel, Flottung, Schuß, Stehfaden etc.

Für die wetterfeste Lutte kommt ein R-L Henkelplüsch zur Anwendung, der auf einer R-L Rundstrickmaschine mit zwei Fadensystemen erzeugt wurde.

3

Es sind aber auch alle anderen Waren einsetzbar, die auf obengenannten Maschinen herstellbar sind.

**R-L Maschenware mit Henkel (2-Fadensystem)**

**Maschinenfeinheit**

Für die Maschinenfeinheit gibt es drei verschiedene Definitionen. Die gebräuchlichste Definition ist die Englische Feinheit.

Definition Feinheit:

$$\text{Englische Feinheit} \quad E = \frac{\text{Anzahl der Nadeln}}{\text{inch}}$$

Die Feinheit, die auch den Maschenstäbchen / inch entspricht, kann bei einer erfindungsgemäßen Lutte $E = 18$ betragen. Es sind aber auch Feinheiten von $E = 2$ bis 44, vorzugsweise 15 bis 25, möglich.

Als Garne der rundgestrickten, rundgewebten oder rundgewirkten bzw. kettenrundgestrickten oder kettenrundgewirkten Basisschläuche können erfindungsgemäß verwendet werden:

**Polykondensate und Polyadditionsprodukte**
- Polyamidfasern
- Polyesterfasern
- Polyurethan- und andere Elastomerfasern
- Polymerisaten
- Polyolefinfasern
- Polyacrylnitrilfasern
- Fasern aus Polyvinylchlorid und Polyvinylidenchlorid
- Polytetrafluorethylenfasern

**Sonstige organische Fasern**
- hochtemperaturstabile organische Fasern und organische Faser mit hohem Elastizitätsmodul
- vollaromatische Polyamide
- Nomex Fasern

- Nomex-ähnliche Fasern
- Kevlar Fasern
- geordnete Polyamide
- sonstige aromatische Polyamide
- Fasern aus Heterocyclen enthaltenden aromatischen Polyamiden
- Fasern aus Polyheterocyclen
- Polyimidfasern
- Polyimidamide Kermel
- Polybenzimidazole (PBI)

**Fasern aus sonstigen Polyhetrocyclen**
- Polyoxdiazole
- Polytriazole
- Polythiadiazole
- Polybenzoxazole
- Polychinazolindione
- Fasern aus Polyphenylensulphid
- Fasern aus Leiterpolymeren

**Synthetische Fasern aus Naturprodukten z. B. Zellwolle, Azetatfasern, Protein, Alginatfasern**

**Naturfasern**
- Wolle (tierisch)
- Baumwolle (pflanzlich)

**Anorganische Fasern**
- glasige Mineralfasern
- Kohlenstoff - Fasern
- polykristalline anorganische Fasern
- Metallfasern

Garnfeinheit

Zur Anwendung kommen bei der Lutte:
für den Henkel ein PES Zwirn dtex 167 x 2,
für die Decke ein PES Garn dtex 78.

Definitionen:

PES = Polyester
Garn = 1 "Faden"
Zwirn = 2 oder mehr Fäden zusammengedreht, deshalb Bezeichnung 167 x 2
dtex = Einheit für Garnstärke

$$1 \text{ dtex} = \frac{1g}{10.000 \text{ m}}$$

Zur Erzeugung eines rundgestrickten, rundgewebten, rundgewirkten, kettenrundgestrickten oder kettenrundgewirkten Schlauches können neben den obengenannten Garnen oder Zwirnen je nach Maschinenfeinheit auch Garne oder Zwirne mit den Stärken von 20 - 8000 dtex zur Anwendung kommen.

Dabei würden Garne oder Zwirne mit den Titer 20 dtex bei Maschinen mit hohen Feinheiten wie z. B. E = 44 eingesetzt, schwere Garne, wie z. B. 4000 dtex würde man bei Maschinen mit der Feinheit E = 2 einsetzen.

Zu jeder Maschinenfeinheit gehört ein bestimmter Bereich von Garnfeinheiten, der nur durch Versuche ermittelt werden kann. Man kann z. B. kein schweres Garn oder keinen schweren Zwirn der Garnfeinheit dtex 1000 auf einer Maschine mit der Maschinenfeinheit E = 44 einsetzen! (Nadelabstände!)

## Maschinen-Nenndurchmesser/Schlauchdurchmesser

Der Maschinen-Nenndurchmesser der Maschine, mit der die Lutte gestrickt wurde, beträgt 26″.

Zur Zeit werden geheim Maschinen mit einem Durchmesser von 1 bis 50″ gebaut. Es ist aber mit Sicherheit möglich, Maschinen mit größerem Durchmesser herzustellen.

Die Viskosität des Imprägnierbades kann sich in folgendem Bereich bewegen: 01 bis 10.000 cp (centi poise), vorzugsweise 50 bis 150 cp (gemessen mit dem Epprecht-Viskosimeter), während die Temperatur des Beschichtungsbades von 4 bis 95° C, vorzugsweise von 18 bis 60° C, betragen kann. Die Durchlaufgeschwindigkeit des Rohschlauches durch das Imprägnierbad beträgt von 0,01 bis 4 m/s, vorzugsweise von 0,03 bis 0,2 m/s.

Erfindungsgemäß werden somit für den Basisschlauch textile Gebilde verwendet, die aus einem oder mehreren Fadensystemen durch Maschenbildung auf Wirk- oder Strickmaschinen hergestellt werden. Man unterscheidet gemäß Vorstehendem mindestens zwei Kategorien: Kuliergewirke und -gestricke (Hauptkennzeichen: Fadenverlauf in Querrichtung, analog Schußrichtung bei Geweben), sowie Kettengewirke (Hauptkennzeichen: Fadenverlauf in Längsrichtung analog Kettrichtung bei Geweben).

Die in der deutschsprachigen Fachterminologie übliche Begriffstrennung im Gewirke und Gestricke bezieht sich auf den Herstellvorgang. Beim Wirken werden die Maschen einer Maschenreihe gleichzeitig ausgebildet (abgeschlagen), während beim Stricken eine Masche nach der anderen entsteht. Bei der Begriffszuordnung gibt es jedoch Ausnahmen. Bindungstechnisch unterscheiden sich Kuliergewirke und -gestricke nicht.

Gewirke und Gestricke besitzen im Gegensatz zu Geweben relative hohe Dehnung und Elastizität, besonders in Breitenrichtung. Darüber hinaus haben sie infolge der Maschenstruktur ein großes Porenvolumen, was z. B. die Thermoisolation begünstigt. Diese und andere Eigenschaften können durch Bindung und Faserstoff- bzw. Garnauswahl weitgehend variiert werden.

Gewirke und Gestricke eignen sich deshalb u. a. besonders zur Herstellung von Wetterlutten.

Eine erfindungsgemäß ausgestaltete Lutte zeichnet sich neben hoher Abriebfestigkeit, maximale Weiterreißfestigkeit und hohe Wärmedämmung außerdem durch geringe Wärmeleitfähigkeit, permanent elektrische Leitfähigkeit und optimale Kraftaufnahme in allen Richtungen aus.

Bei "Wegwerf"-Lutten werden natürliche, regenerierte, verrottbare Fasermaterialien und Beschichtungsmassen eingesetzt. Dadurch sind erfindungsgemäße beidseitig beschichtete, rundgewirkte, rundgewebte oder rundgestrickte Lutten auch umweltfreundlich.

Die Beschichtungsmassen sind physiologisch unbedenklich und schwer entflammbar, so daß sich solchermaßen ausgestaltete Lutten besonders für den Einsatz im untertägigen Steinkohlebergbau eignen.

Die Lutten besitzen in der Regel eine Wanddicke von 2 mm oder weniger, gemessen über die beiderseitigen Beschichtungen. Es handelt sich um ein hochflexibles Material. Von besonderem Vorteil ist, daß alle Schweißnähte vermieden sind. Auch die Anordnung späterer Bewehrungen ist erleichtert, da keine Zwickel im Wege stehen. Des weiteren kann eine erfindungsgemäße Schlauchlutte sowohl als Druck- wie als Sauglutte verwendet werden, da wegen der fehlenden Zwickel und Schweißnähte die Anordnung von Drahtspiralen ohne weiteres möglich ist.

In den **Patentansprüchen 2** bis **8** sind sehr vorteilhafte Ausführungsformen beschrieben.

## Lösung der Aufgabe betreffend das Verfahren

Diese Aufgabe wird durch die in **Patentanspruch 9** wiedergegebenen Merkmale gelöst.

Durch das erfindungsgemäße Verfahren ist es erstmals möglich, kontinuierlich oder diskontinuierlich rundgewirkte oder rundgestrickte Schlauchlutten gleichzeitig innen und außen lückenlos mit Kunststoff zu beschichten.

Das erfindungsgemäß vorgeschlagene Verfahren eignet sich auch zur Massenproduktion solchermaßen ausgebildeter Schlauchlutten, die bei Anwendung des erfindungsgemäßen Verfahrens ohne Zwickel, also vollkommen rund und ohne jegliche Naht, hergestellt werden können.

In den **Patentansprüchen 10** und **12** sind sehr vorteilhafte Verfahrensweisen beschrieben. Diese Verfahrensweisen lassen sich mit wirtschaftlich vernünftigem Aufwand anwenden.

EP 0 393 686 A2

## Lösung der Aufgabe betreffend die Einrichtung (Vorrichtung)

Diese Aufgabe wird durch die in **Patentanspruch 13** wiedergegebenen Merkmale gelöst.

Eine erfindungsgemäße Einrichtung (Vorrichtung) läßt sich mit relativ geringem Aufwand herstellen. Diese Einrichtung erfordert keine über das übliche Maß bei der Herstellung von Lutten und der Verarbeitung von Kunststoffmassen hinausgehende Sicherheitseinrichtungen und belastet die Umwelt nicht.

In den **Patentansprüchen 14** bis **16** sind vorteilhafte Ausführungsformen beschrieben.

Weitere Merkmale und Vorteile ergeben sich aus der nachfolgenden Beschreibung der Zeichnung, in der die Erfindung - teils schematisch - an mehreren Ausführungsbeispielen veranschaulicht ist. Es zeigen:

Fig. 1 Eine Vorrichtung zum diskontinuierlichen gleichzeitigen Innen- und Außenbeschichten rundgestrickter oder rundgewirkter Schlauchlutten in einem ersten, beginnenden Verfahrensabschnitt;

Fig. 2 die aus Fig. 1 ersichtliche Vorrichtung, wobei die Schlauchlutte schon über einen größeren Teil ihrer Länge innen und außen mit Kunststoff beschichtet worden ist;

Fig. 3 die gleiche Vorrichtung wie in den Fig. 1 und 2 dargestellt, wobei die Schlauchlutte etwa auf ihrer gesamten Länge innen und außen mit einem ununterbrochenen Kunststoffmantel versehen ist;

Fig. 4 eine weitere Ausführungsform der Erfindung;

Fig. 5 abermals eine weitere Ausführungsform der Erfindung;

Fig. 6 eine weitere Ausführungsform der Erfindung;

Fig. 7 eine weitere Ausführungsform der Erfindung;

Fig. 8 eine weitere Ausführungsform der Erfindung zur diskontinuierlichen gleichzeitigen Innen- und Außenbeschichtung mit Kunststoff einer rundgewirkten oder rundgestrickten Schlauchlutte bei Beginn des Beschichtungsvorganges, mit einem runden, kugelförmigen oder zylindrischen Formkörper;

Fig. 9 die gleiche Vorrichtung wie in Fig. 8 dargestellt, wobei der Beschichtungsvorgang der rundgewirkten oder rundgestrickten Schlauchlutte schon weiter fortgeschritten ist und

Fig. 10 das Endstadium der Innen- und Außenbeschichtung der Schlauchlutte.

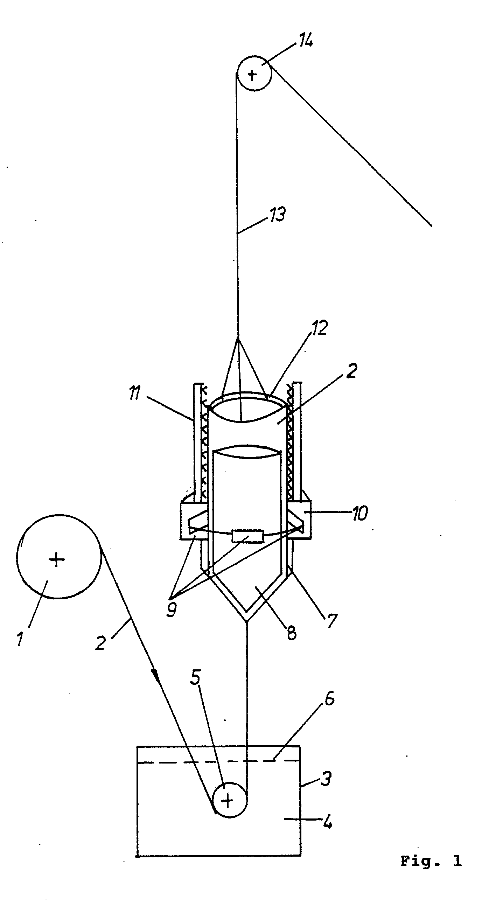

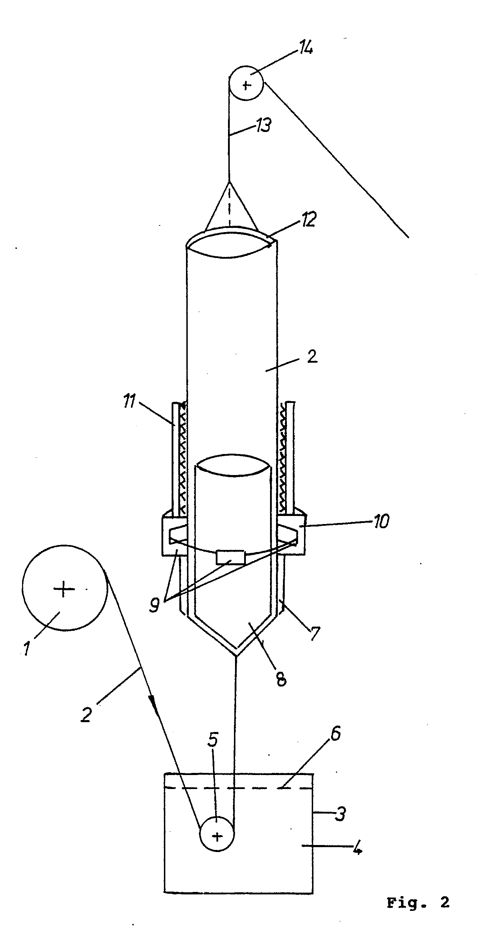

Bei der aus den Fig. 1 bis 3 ersichtlichen Ausführungsform ist mit dem Bezugszeichen 1 ein Wickel bezeichnet, auf dem die Rohrware in Form eines rundgestrickten oder kettenrundgestrickten oder rundgewirkten bzw. kettenrundgewirkten Schlauches 2 in der jeweils gewünschten Länge flach aufgewickelt ist.

Der Schlauch 2 wird in Pfeilrichtung durch ein in einem Behälter 3 befindliches Imprägnierbad 4 über eine Umlenkrolle 5 hindurchgeführt. Die Umlenkrolle 5 ist unterhalb des Badspiegels 6 des Imprägnierbades 4 angeordnet, so daß der Schlauch 2 vollkommen in das Imprägnierbad 4 eingetaucht wird. Das Imprägnierbad 4 besteht aus hitzesensiblen Chemikalien, beispielsweise aus einem oder mehreren Kunststoffen als Basisstoffe, z. B. Polyurethane, plus Zuschlagstoffe, z. B. Ruß oder Graphit. Zur Erreichung der Koagulierbarkeit können Zugaben, z. B. von Elektrolyten, erfolgen. Des weiteren können Lösungsmittel zugesetzt sein. Um eine Schwerentflammbarkeit zu erreichen, können in dem Imprägnierbad z. B. Amoniumsalze oder dgl. vorhanden sein. Die in Betracht kommenden Basisstoffe, Zuschlagstoffe, Stoffe zur Erreichung einer Schwerentflammbarkeit und zur Erreichung der Koagulier barkeit sind im Zusammenhang mit dem Patentanspruch 4 -wenn auch nicht abschließend - beschrieben worden.

In dem Imprägnierbad 4 wird der Schlauch 2 nicht nur an seiner Außenseite intensiv benetzt und beschichtet. Vielmehr durchdringt das Imprägnierbad auch die Maschen des Schlauches 2, so daß sich gleichzeitig auf der Innenseite des Schlauches 2 ebenfalls eine lückenlose Beschichtung ausbildet.

Nach dem Passieren der Umlenkrolle 5 wird der imprägnierte bzw. innen und außen beschichtete Schlauch 2 in die Vertikale umgelenkt. Oberhalb des Badspiegels 6 ist eine Abstreifvorrichtung 7 angeordnet, die den Schlauch 2 ringförmig umgibt. Der Schlauch wird innen durch einen entgegengesetzt zur Zugrichtung sich konisch verjüngenden Formkörper 8 geöffnet und offengehalten. Der Formkörper 8 wird in einem Magnetfeld zentriert, das durch eine ringförmige Magnetvorrichtung 10 gebildet wird. Mehrere Magnete der Magnetvorrichtung sind mit dem Bezugszeichen 9 bezeichnet.

Bei 11 ist eine Heizkammer und Koagulierzone angedeutet.

Das Bezugszeichen 12 bezeichnet einen Ring zum Offenhalten des Schlauches 2, der nach dem Verlassen der Koagulierzone 11 nunmehr innen und außen mit einer dauerhaften Kunststoffbeschichtung und mit den erforderlichen Zuschlagstoffen versehen ist. Die Kunststoffbeschichtung wird vorzugsweise glattwandig innen und außen ausgebildet, um auch den Strömungswiderstand innerhalb des Schlauches 2 herabzusetzen.

Der Schlauch 2 wird durch eine Zugvorrichtung 13 und Umlenkrolle 14 nach oben aus der Koagulierzone 11 herausgezogen. Die Zugvorrichtung 13 ist lediglich als flexibles Zugmittel - Seil oder Kette - angedeutet und greift an dem Ring 12 an.

Bei allen der aus der Zeichnung ersichtlichen Ausführungsformen ist es möglich, den fertig beschichte-

7

ten Luttenschlauch 2 nach seiner Fertigstellung umzukrempeln, also die Außenseite zur Innenseite zu machen.

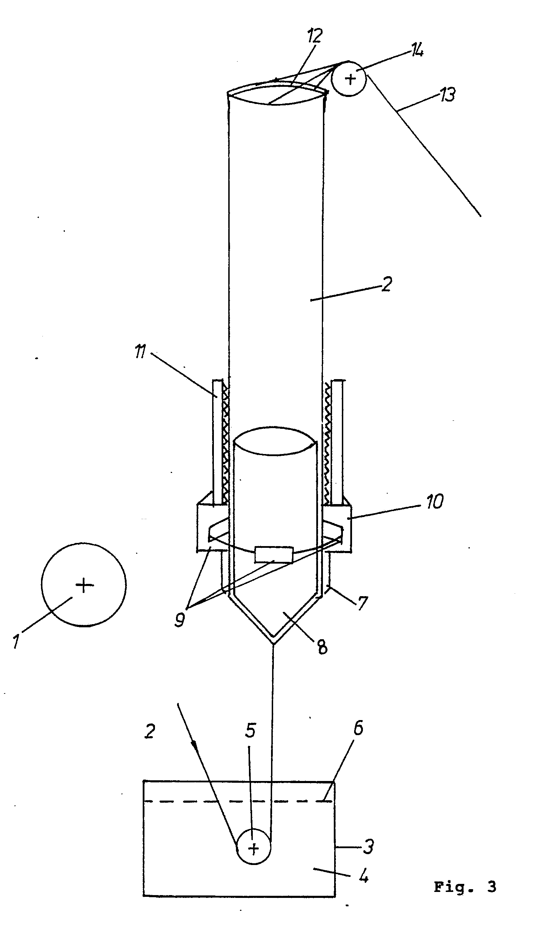

Bei der Ausführungsform nach den Fig. 1 bis 3 handelt es sich um ein diskontinuierliches Verfahren, da immer nur eine bestimmte Schlauchlänge innen und außen beschichtet wird. Fig. 3 zeigt sozusagen das Endstadium der Beschichtung des Schlauches 2. Der fertigbeschichtete Luttenschlauch wird aus der Vorrichtung entfernt und z. B. aufgewickelt. Im Falle von Sauglutten kann der Luttenschlauch mit einer Drahtspirale in geeigneter Art und Weise versehen werden.

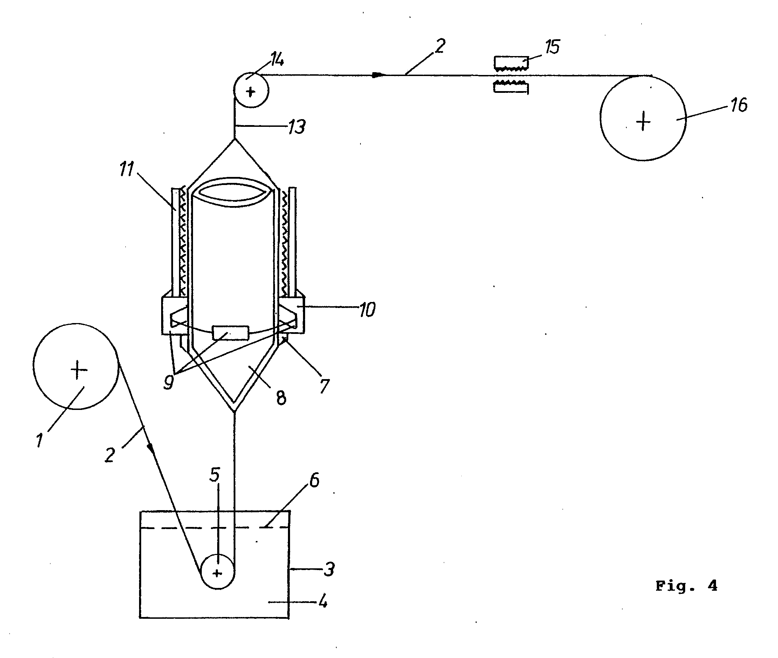

Bei der Ausführungsform gemäß Fig. 4 sind für Teile gleicher Funktion die gleichen Bezugszeichen wie in den Fig. 1 bis 3 verwendet worden.

Die Ausführungsform nach Fig. 4 unterscheidet zunächst von der Ausführungsform nach den Fig. 1 bis 3 dadurch, daß hiermit eine kontinuierliche Innen- und Außenbeschichtung eines rundgewirkten oder rundgestrickten Schlauches 2 möglich ist. Sobald der Wickel 1 abgewickelt ist, kann im fliegenden Wechsel ein neuer Wickel 1 mit einem Rohschlauch 2 angeordnet werden. Der innen- und außenbeschichtete Schlauch 2 wird nach Passieren der Umlenkrolle 14 einer Schneidvorrichtung 15 zugeführt. Die

Schneidvorrichtung 15 kann den fertigen Luttenschlauch 2 auf die gewünschten Längen abschneiden. Der Luttenschlauch 2 wird daraufhin auf einen Wickel 16 aufgerollt. Im übrigen ist die Imprägnierung und damit die Innen- und Außenbeschichtung, die Koagulierung und die Funktion des Formkörpers 8 sowie der Magnetvorrichtung 10 so wie im Zusammenhang mit den Fig. 1 bis 3 beschrieben.

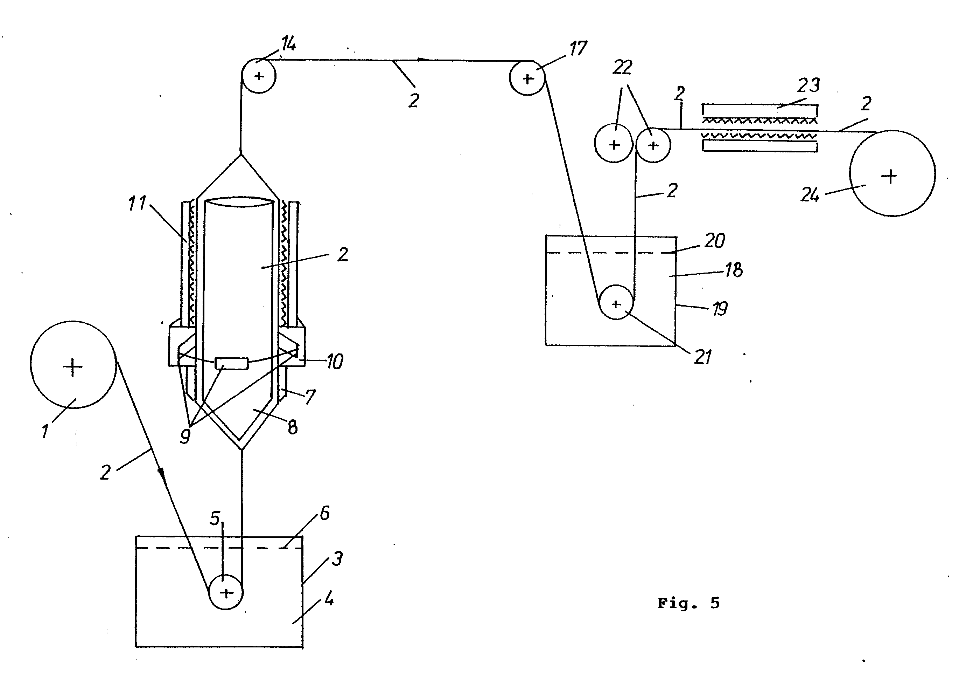

Auch bei der Ausführungsform nach Fig. 5 sind für Teile gleicher Funktion die gleichen Bezugszeichen wie bei den Fig. 1 bis 3 verwendet worden.

Diese Ausführungsform unterscheidet sich von den beiden vorangegangenen dadurch, daß im kontinuierlichen Verfahren ein Schlauch 2 beidseitig, also innen und außen, durch eine hitzesensibel eingestellte Kunststoffdispersion im Imprägnierbad 4 beschichtet wird. Der durch die Umlenkrolle 14 in die Horizontale umgelenkte, bereits beidseitig beschichtete Schlauch 2 wird durch eine weitere Umlenkrolle 17 nach unten umgelenkt und durchläuft ein Waschbad 18, das in einem Behälter 19 angeordnet ist. Das Waschbad 18 kann aus Wasser bestehen. Mit 20 ist der Badspiegel bezeichnet. Eine Umlenkrolle 21 ist unterhalb des Badspiegels 20 angeordnet. Der gewaschene Schlauch 2 durchläuft eine Abquetschvorrichtung 22, die in der Fig. 4 aus zwei parallel zueinander angeordneten Rollen besteht.

Nach dem Passieren der Abquetschvorrichtung 22 durchläuft der Schlauch 2 einen Trockner 23, der beheizt ist. Der getrocknete, beidseitig beschichtete Luttenschlauch 2 wird durch eine Aufwickelvorrichtung 24 aufgewickelt. Hiervon wird die geeignete Meterzahl in einem späteren Abtrennverfahren abgetrennt.

Ebenso wie bei allen anderen im Rahmen des Erfindungsgedankens (Aufgabe und Lösung) fallenden Ausführungsformen können die verschiedenen Aufwickelvorrichtungen, Wickel, Trockner und Umlenkrollen sämtlich oder teilweise motorisch angetrieben sein.

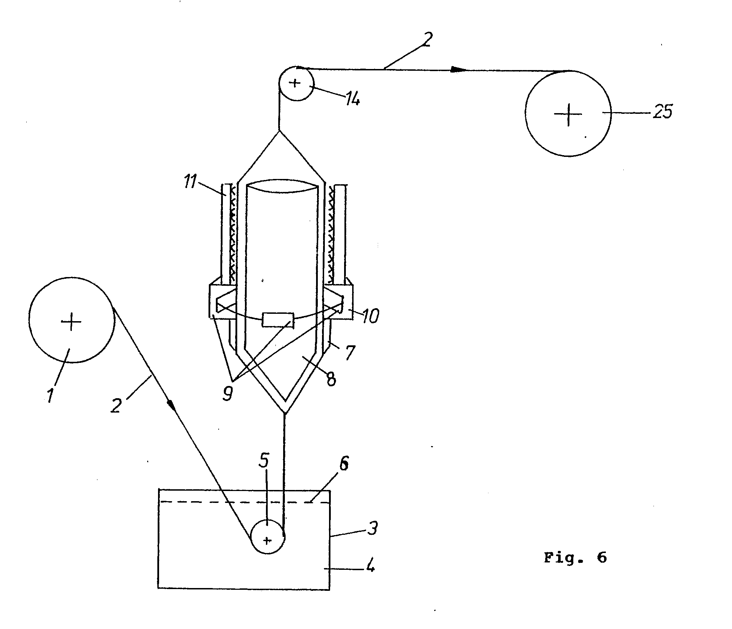

Bei der Ausführungsform gemäß Fig. 6 sind ebenfalls für Teile gleicher Funktion die gleichen Bezugszeichen verwendet worden. Die Ausführungsform unterscheidet sich von den vorbeschriebenen dadurch, daß im kontinuierlichen Durchlaufverfahren ein rundgewirkter oder rundgestrickter Schlauch 2 beidseitig beschichtet und durch eine Aufwickelvorrichtung 25 aufgewickelt wird.

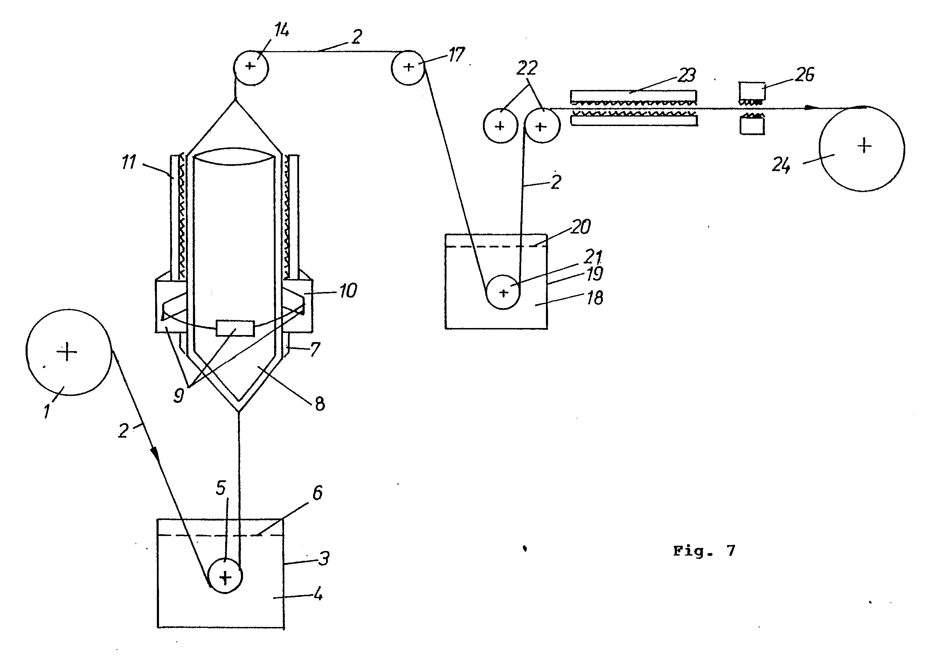

Die Ausführungsform nach Fig. 7 unterscheidet sich von der Ausführungsform nach Fig. 5 dadurch, daß der beidseitig beschichtete Schlauch 2 nach dem Passieren der Abquetschvorrichtung 22 und nach dem Passieren des Trockners 23 einer Schneidvorrichtung 26 zugeführt wird, bevor er durch die Aufwickelvorrichtung 24 aufgewickelt wird. Durch die Schneidvorrichtung 26 ist es möglich, den Luttenschlauch 2 zu beschneiden und/oder ihn auf die vorgeschriebenen Längen abzuschneiden und dann auf die Aufwickelvorrichtung 24 aufzuwickeln.

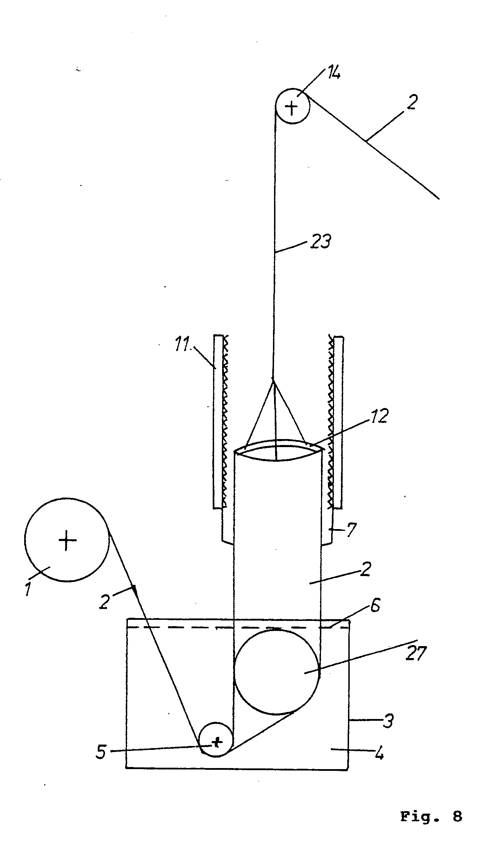

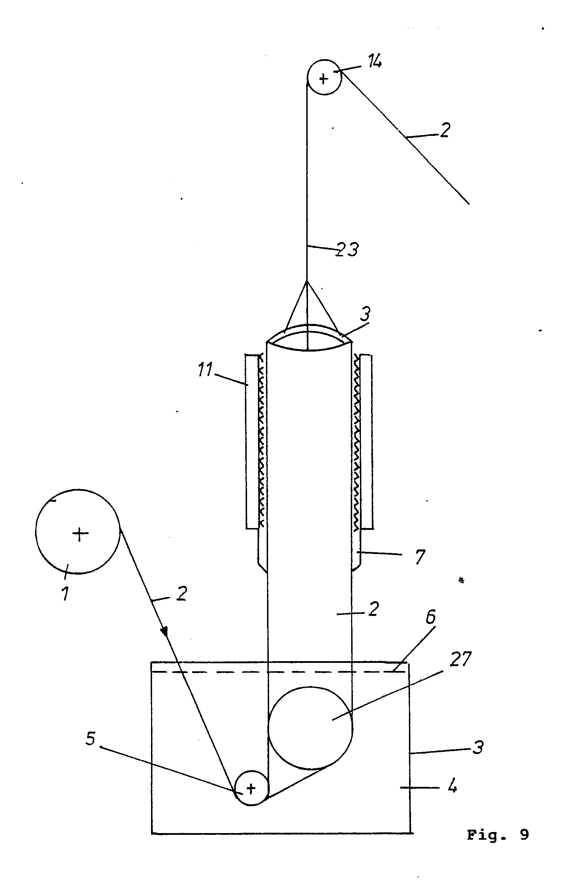

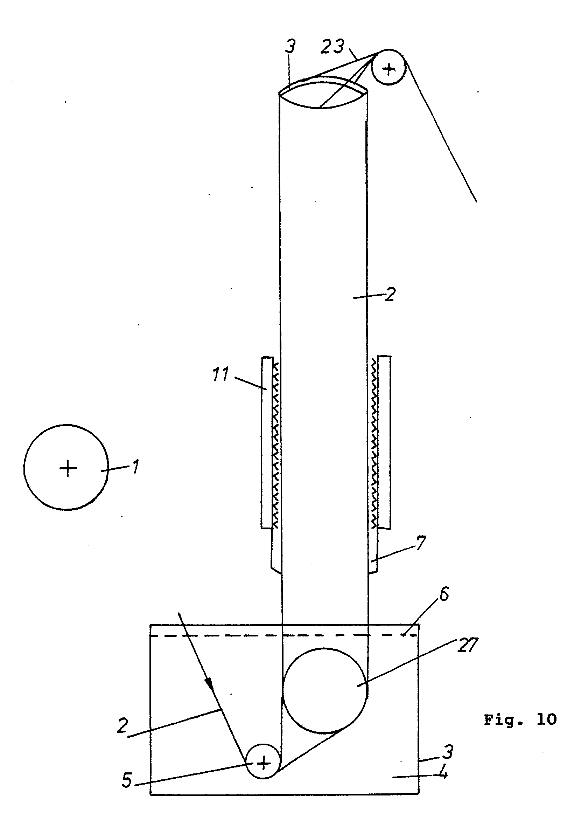

Die Ausführungsform nach Fig. 8 unterscheidet sich von allen anderen vorbeschriebenen Ausführungsformen dadurch, daß der Formkörper 8 durch einen kugelförmigen oder walzenförmigen bzw. zylindrischen Formkörper 27 offengehalten wird. Diese Vorrichtung dient zur diskontinuierlichen Durchführung eines Verfahrens, wobei Fig. 8 den Beginn der innen- und außenseitigen Beschichtung des Schlauches 2 veranschaulicht, während die Fig. 9 und 10 weitere, schon fortgeschrittenere Verfahrensstufen zeigen. Fig. 10 zeigt den Schlauch 2 nach seiner Beschichtung, allerdings kurz vor dem Herausnehmen aus der Vorrichtung. Insofern entsprechen die Verfahrensstufen, die in den Fig. 8 bis 10 dargestellt sind, den Verfahrensstufen nach den Fig. 1 bis 3. Selbstverständlich kann der Formkörper 27 auch bei allen anderen Ausführungsformen angewandt werden.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Literaturverzeichnis

- DIN 21 605
- DIN 21 606
- DIN 21 612
- Prospektblatt "Bewetterung - Sicherheit im Berg- und Tunnelbau" der Firma Oldorid, Hülsbergstraße 255, Marl-Westfalen;
- Belüftungsrohre von Lesjöfors Plast AB, Box 1062, S-680 96 Lesjöfors, Schweden;
- Ferroplast "Plastik Wetterlutten für den Berg- und Tunnelbau", Prospektblatt der Firma Ferroplast Gesellschaft für Metall- und Kunststofferzeugnisse mbH, 4320 Hattingen/Ruhr, Am Beul 33;
- Chemifasern/Textilindustrie, Dezember 1984, S. 945 bis 948, insbes. S. 945, Spalte 2 letzter Abs. bis Spalte 3 zweiter Abs.;
- Glückauf 123 (1987) Nr. 24, S. 1534 ff;
- GB-PS 10 17 484.

## Bezugszeichenliste

1 Wickel
2 Schlauch
3 Behälter
4 Imprägnierbad
5 Umlenkrolle
6 Badspiegel
7 Abstreifvorrichtung
8 Formkörper
9 Magnete
10 Magnetvorrichtung
11 Koagulierzone, Heizkammer
12 Ring
13 Zugvorrichtung
14 Umlenkrolle
15 Schneidvorrichtung
16 Wickel
17 Umlenkrolle
18 Waschbad
19 Behälter
20 Badspiegel
21 Umlenkrolle
22 Abquetschvorrichtung
23 Trockner
24 Aufwickelvorrichtung
25 Aufwickelvorrichtung
26 Schneidvorrichtung
27 Formkörper

## Ansprüche

1. Faltbare wetterfeste Schlauchlutte aus Textilien mit luftdichter Beschichtung, insbesondere zur Verwendung im Untertagebergbau oder Tunnelbau, vornehmlich im Steinkohlebergbau, **gekennzeichnet durch** die Kombination folgender Merkmale:
   a) Die Lutte wird aus natürlichen, regenerierten, verrottbaren Fasermaterialien hergestellt;
   b) die Lutte besteht aus einem nahtlosen, rundgestrickten oder rundgewebten, zwickellosen Schlauch;
   c) der Schlauch ist beidseitig - innen und außen -mit einer ununterbrochenen Beschichtung versehen;
   d) die Beschichtung besteht aus einem verrottbaren Material.
2. Lutte nach Anspruch 1, **dadurch gekennzeichnet**, daß der rundgestrickte, rundgewebte bzw.

kettenrundgestrickte oder rundgewirkte bzw. kettenrundgewirkte Basisschlauch (2) wahlweise z. B. aus folgenden Garnen besteht:

**Polykondensate und Polyadditionsprodukte**
- Polyamidfasern
- Polyesterfasern
- Polyurethan- und andere Elastomerfasern
- Polymerisaten
- Polyolefinfasern
- Polyacrylnitrilfasern
- Fasern aus Polyvinylchlorid und Polyvinylidenchlorid
- Polytetrafluorethylenfasern

**Sonstige organische Fasern**
- hochtemperaturstabile organische Fasern und organische Faser mit hohem Elastizitätsmodul
- vollaromatische Polyamide
- Nomex Fasern
- Nomex-ähnliche Fasern
- Kevlar Fasern
- geordnete Polyamide
- sonstige aromatische Polyamide
- Fasern aus Heterocyclen enthaltenden aromatischen Polyamiden
- Fasern aus Polyheterocyclen
- Polyimidfasern
- Polyimidamide Kermel
- Polybenzimidazole (PBI)

**Fasern aus sonstigen Polyhetrocyclen**
- Polyoxdiazole
- Polytriazole
- Polythiadiazole
- Polybenzoxazole
- Polychinazolindione
- Fasern aus Polyphenylensulphid
- Fasern aus Leiterpolymeren

**Synthetische Fasern aus Naturprodukten z.B. Zellwolle, Azetatfasern, Protein, Alginatfasern**

**Naturfasern**
- Wolle (tierisch)
- Baumwolle (pflanzlich)

**Anorganische Fasern**
- glasige Mineralfasern
- Kohlenstoff - Fasern
- polykristalline anorganische Fasern
- Metallfasern

3. Lutte nach Anspruch 1 und/oder 2, **dadurch gekennzeichnet,** daß die innere und äußere Beschichtung des Basisschlauches (2) aus dem gleichen Material oder aus verschiedenen Materialien besteht.

4. Lutte nach Anspruch 1 oder einem der folgenden, **dadurch gekennzeichnet,** daß die innere und äußere Kunststoffbeschichtung - einzeln und/oder in Mischung - z.B. aus folgenden Stoffen besteht:

**Kunststoffbeschichtungen**

**Basisstoffe**
- Polyurethane
- Polyvinylacetate
- Polyacrylsäureester
- Polyurethanacrylsäureester
- Polyvinylchlorid
- Melaminharze
- Polyamid
- Acrylsäure
- Acrylnitril/Styrol/Butadien Copolymer
- Phenolharze
- Polyäthylen

- Polyisobutylen
- Celluloseester
- Polybutadienacrylnitril
- Polychlorbutadien
- Silikonkautschuk
- Celluloseacetat, -propionat, -acetobutyrat
- Polycarbonate
- Epoxydharze
- Polyesterharze
- Alkydharze

**Zuschlagstoffe**

Zur Erreichung der elektrischen Leitfähigkeit
- Ruß/Graphit
- Metallpartikel
- Aluminium, Kupfer, Bronze, Blei
- Weichmacher

Zur Erreichung der Schwerentflammbarkeit
- Amoniumsalze/Magnesiumsalze
- Borverbindungen
- Chlorparaffin
- Einlagerung von basischen Metalloxyden
- Antimontrioxyd (Titan, Antimon, Zinn)
- organische Stickstoffe
- phosphorhaltige Verbindungen
- Polyvinylchlorid

Zur Erreichung der Koagulierbarkeit
- Zugabe von Elektrolyten
- Zugabe eines Tensids entgegengesetzter Ladung zu einer ionisch modifizierten Dispersion
- Einsatz eines thermisch spaltbaren Emulgators
- Zusatz von Produkten mit inverser Löslichkeit
z. B. Polyvinylmethyläther
Polyätherthioäther
Polyäther
Organopolysiloxane
- Lösungsmittel.

5. Lutte nach Anspruch 1 oder einem der folgenden, **dadurch gekennzeichnet,** daß die innere und äußere Kunststoffbeschichtung aus natürlichen, synthetischen, regenerierten und verrottbaren Materialien besteht.

6. Lutte nach Anspruch 1 oder einem der folgenden, **dadurch gekennzeichnet,** daß die Englische Feinheit E des textilen Gewebes des Basisschlauches der Lutte (2) E = 2 bis 44, vorzugsweise 12 bis 18, entspricht, wobei

$$E = \frac{\text{Anzahl der Nadeln}}{\text{inch}}$$

bedeutet.

7. Lutte nach Anspruch 1 oder einem der folgenden, **dadurch gekennzeichnet,** daß folgende Garnfeinheit für den Aufbau des Basisschlauches der Lutte 2 zur Anwendung kommt:
Für den Henkel ein Polyester-Zwirn dtex 167 x 2; für die Decke ein Polyester-Garn dtex 78, wobei unter Garn ein "Faden" und unter Zwirn zwei oder mehrere zusammengedrehte Fäden verstanden werden, und daß zur Erzeugung eines rundgestrickten, rundgewebten oder rundgewirkten, kettenrundgestrickten oder kettenrundgewirkten Schlauches (2) neben den obengenannten Garnen oder Zwirnen je nach Maschinenfeinheit auch Garne oder Zwirne mit den Stärken 20 bis 8000 dtex zur Anwendung gelangen und Garne oder Zwirne mit dem Titer 20 dtex bei Maschinen mit hohen Feinheiten wie z. B. E = 44 einsetzbar sind,

11

während bei der Verwendung von schweren Garnen von z. B. 4000 dtex Feinheiten von E = 2 anwendbar sind.

8. Lutte nach Anspruch 1 oder einem der folgenden, **dadurch gekennzeichnet, daß** die für die Herstellung des Basisschlauches (2) verwendete Maschenware mit verschiedenen Bindungselementen kombinierbar ist, wie Henkel, Flottung, Schuß, Stehfaden oder dgl., und daß insbesondere zur Herstellung wetterfester Lutten ein R-L-Henkelplüsch zur Anwendung gelangt, der auf einer R-L-Rundstrickmaschine mit Zweifadensystem erzeugbar ist.

9. Verfahren zum Herstellen einer Lutte nach Anspruch 1 oder einem der folgenden, **dadurch gekennzeichnet,**

a) daß zunächst ein falten- und zwickelloser Schlauch (2) rundgestrickt, rundgewebt oder kettenrundgestrickt oder gewirkt oder kettenrundgewirkt wird; b) daß der Basisschlauch (2) anschließend flach aufgewickelt wird;

c) daß der flach aufgewickelte Schlauch (2) durch ein hitzesensibles Imprägnierbad (4) hindurchgeleitet wird und daß in dem Imprägnierbad (4) die zur Beschichtung dienende Masse z. B. auf Kunststoffbasis innen und außen auf den Basisschlauch (2) als ununterbrochene Schicht aufgebracht wird;

d) und daß der Basisschlauch (2) mit vorbestimmter Geschwindigkeit durch das mit vorbestimmter Temperatur beheizbare Bad (4) hindurchbewegt und vor oder nach Passieren der Badoberfläche (6) des Imprägnierbades (4)innenseitig zum Schlauch geöffnet wird;

e) woraufhin der geöffnete Schlauch durch die Koagulierzone (11) hindurchbewegt und anschließend weiteren Bearbeitungsvorgängen z. B. Waschen, Schneiden, zugeführt wird.

10. Verfahren nach Anspruch 9, **dadurch gekennzeichnet,** daß der innen- und außenbeschichtete Luttenschlauch (2) in vertikaler Ebene aus der Koagulierzone (11) wegbewegt wird.

11. Verfahren nach Anspruch 10, **dadurch gekennzeichnet,** daß der innen- und außenbeschichtete Luttenschlauch (2) nach dem Passieren der Koagulierzone (11) auf die jeweils vorbestimmte Länge abgeschnitten und/oder kontinuierlich im fliegenden Wechsel auf Wickeln (16) aufgewickelt wird.

12. Verfahren nach Anspruch 10, **dadurch gekennzeichnet,** daß der innen- und außenbeschichtete Schlauch (2) nach dem Passieren der Koagulierzone (11) durch ein Wasserbad (18) und anschließend durch eine Abquetschvorrichtung (22) hindurchgeführt wird.

13. Einrichtung zum Durchführen des Verfahrens nach Anspruch 9 oder einem der folgenden, **dadurch gekennzeichnet,** daß die Einrichtung mindestens eine Rohwarenrolle (1), einen Imprägnierbehälter (3) zur Aufnahme von hitzesensibelen Chemikalien für das Imprägnierbad (4) aufweist, in dem eine Umlenkvorrichtung (5) un terhalb der Badoberfläche (6) angeordnet ist, und daß oberhalb der Badoberfläche (6) des Imprägnierbades (4) ein im Innern des beschichteten Luttenschlauches (2) gehaltener Formkörper (8, 27) angeordnet ist, der den bahnförmig gefalteten Schlauch (2) zum Schlauchgebilde öffnet, und daß im Bereich des Formkörpers (7, 27) oder kurz anschließend an diesen eine Heizkammer (11) vorgesehen ist, durch die der innen- und außenbeschichtete Luttenschlauch (2) koaxial hindurchführbar ist.

14. Einrichtung nach Anspruch 13, **dadurch gekennzeichnet,** daß die Vorrichtung einen Ring (3) aufweist, durch den der Luttenschlauch (2) in vertikaler Richtung zum Badspiegel (6) des Imprägnierbades (4) nach oben abziehbar ist.

15. Einrichtung nach Anspruch 14, **dadurch gekennzeichnet,** daß die Einrichtung mindestens eine Schneidvorrichtung (15) und eine Aufwickelvorrichtung (z. B. 16) sowie ggf. eine Abquetschvorrichtung (22) und ein Waschbad (18) aufweist.

16. Einrichtung nach Anspruch 14, **dadurch gekennzeichnet,** daß der Formkörper (8) als sich entgegengesetzt zur Transportrichtung des innen- und außenbeschichteten Luttenschlauches (2) konisch verjüngender Körper ausgebildet ist, der durch ein Magnetfeld (10) zentrisch zum Luttenschlauch (2) gehalten ist, oder daß der Formkörper ein zylindrischer, walzenförmiger oder kugelförmiger Körper (27) ist, der in dem Imprägnierbad (4) angeordnet ist und den flachgefalteten Luttenschlauch (2) schlauchförmig innenseitig öffnet.

Fig. 1

Fig. 2

EP 0 393 686 A2

Fig. 3

Fig. 4

Fig. 5

EP 0 393 686 A2

Fig. 6

Fig. 7

EP 0 393 686 A2

Fig. 8

Fig. 9

Fig. 10